# EUROPÄISCHE PATENTSCHRIFT

(11) **EP 1 200 449 B1**
(45) Veröffentlichungstag und Bekanntmachung des Hinweises auf die Patenterteilung: **09.07.2003**
(21) Anmeldenummer: 00958283.4
(22) Anmeldetag: 20.07.2000
(51) Int. Cl.: C07F 7/21

(54) **VERFAHREN ZUR HERSTELLUNG CYCLISCHER DIMETHYLSILOXANE**
METHOD FOR PRODUCING CYCLIC DIMETHYLSILOXANES
PROCEDE POUR LA PRODUCTION DE DIMETHYLSILOXANES CYCLIQUES

(30) Priorität: 22.07.1999 DE 19934374
(43) Veröffentlichungstag der Anmeldung: 02.05.2002
(73) Patentinhaber: GE Bayer Silicones GmbH & Co. KG, 40699 Erkrath (DE)
(72) Erfinder: MAASS, Günther, 51469 Bergisch Gladbach (DE); DEGEN, Bruno, 53804 Much (DE)
(86) Internationale Anmeldenummer: EP0006924
(87) Internationale Veröffentlichungsnummer: WO01007445

(56) Entgegenhaltungen:
- DE-A- 2 908 249
- DE-B- 1 083 820

## Beschreibung

Die Erfindung betrifft ein verbessertes Verfahren zur Herstellung cyclischer Dimethylsiloxane der allgemeinen Formel [(CH₃)₂SiO]ₙ (I), in der n eine ganze Zahl von 3 bis 10 bedeutet, aus einem Gemisch verunreinigter cyclischer Polydimethylsiloxane und/oder kettenförmiger Polydimethylsiloxanole, wie es bei der Hydrolyse von technischem Dimethyldichlorsilan in großen Mengen anfällt.

### Stand der Technik

In den letzten Jahren ist der Bedarf an kostengünstigen Siliconelastomeren unterschiedlicher Typen weltweit stark angewachsen. Gleichzeitig sind die Ansprüche an die Reinheit der diesen Siliconelastomeren zugrundeliegenden Polydimethylsiloxane gestiegen. Als Basismaterial für die streng kettenförmigen Polydimethylsiloxane dienen cyclische Polydimethylsiloxane, wobei dem Octamethylcyclotetrasiloxan (in der Folge als "D₄" bezeichnet) besondere Bedeutung zukommt, da es destillativ sehr hoch gereinigt und in einfacher Weise zu Polymeren mit gezieltem Aufbau umgearbeitet werden kann. Der Bedarf an hochreinem, kostengünstig hergestelltem D₄ ist daher hoch und steigt weiter an.

Ausgangsmaterial für die Herstellung cyclischer Polydimethylsiloxane, wie Octamethylcyclotetrasiloxan, ist das Hydrolysat von technischem Dimethyldichlorsilan, das in großen Mengen aus Silicium und Methylchlorid hergestellt wird. Das Hydrolysat besteht im wesentlichen aus einer Mischung cyclischer Polydimethylsiloxane der Formel I und kettenförmiger Polydimethylsiloxanole. Bei den bekannten Verfahren zur Herstellung von cyclischen Polydimethylsiloxanen wird das Hydrolysat in Gegenwart eines alkalischen Katalysators "equilibriert", d. h. in einen Gleichgewichtszustand überführt, in dem cyclische Polydimethylsiloxane und offenkettige Polydimethylsiloxanole nebeneinander vorliegen. Aus dem Equilibrierungsgemisch werden die niedrigersiedenden cyclischen Polydimethylsiloxane abdestilliert, so daß die offenkettigen Polydimethylsiloxanole nach und nach in cyclische Polydimethylsiloxane umgewandelt werden, die durch fraktionierte Destillation in die einzelnen Homologen mit 3 bis 10 Dimethylsiloxygruppen im Ring aufgetrennt werden können.

Technisches Dimethyldichlorsilan, wie es für die Hydrolysestufe verwendet wird, enthält in wechselnden geringen Mengen Verunreinigungen, wie Methyltrichlorsilan, Ethylhydrogendichlorsilan, Methylhydrogendichlorsilan und Trimethylmonochlorsilan. Die daraus entstehenden Cohydrolyseprodukte enthalten daher Monomethylsiloxy-, Ethylhydrogensiloxy-, Methylhydrogensiloxy- sowie Trimethylsiloxygruppen. Wenn die cyclischen Dimethylsiloxane zur Herstellung von streng linearen, hochmolekularen Polysiloxanen (Siliconen) verwendet werden sollen, müssen diese Cohydrolyseprodukte abgetrennt werden, da sie bei der Polymerisation unerwünschte Kettenverzweigungen ergeben und/oder zu vorzeitigem Kettenabbruch führen.

Bei dem Verfahren zur Herstellung reiner cyclischer Polydimethylsiloxane nach DE-1083 820-B wird das "unreine Dimethylsiloxan", ein geradkettiges und/oder verzweigtes Polydimethylsiloxan mit einem Molgewicht von etwa 1.100 bis zu etwa 2.000.000, das Trimethylsiloxy- und/oder Methylhydrogensiloxygruppen enthält, in Gegenwart eines alkalischen Katalysators, wie Kaliumhydroxid, und einer inerten organischen Flüssigkeit, in der das Polydimethylsiloxan wenigstens teilweise löslich ist, auf eine Temperatur zwischen 80 und 200° C erhitzt, und das reine cyclische Polydimethylsiloxan wird unter vermindertem Druck abdestilliert. Das Verfahren wird diskontinuierlich durchgeführt; das reine cyclische Polydimethylsiloxan ist ein Gemisch aus homologen cyclischen Polydimethylsiloxanen.

Gemäß DE- 2 908 249-A wird dieses Verfahren kontinuierlich gestaltet und zugleich dadurch auf die Herstellung von Octamethylcyclotetrasiloxan (D₄) ausgerichtet, daß die als Nebenprodukte gebildeten anderen cyclischen Polydimethylsiloxane, die wenigstens Hexamethylcyclotrisiloxan enthalten, in den Reaktor zurückgeführt werden.

In DE 195 27 516 A1 wird die Rolle beschrieben, welche Verbindungen mit trifunktionellen Monomethylsiloxygruppen (MeSiO_{3/2}) bei der Gewinnung von cyclischen Polydimethylsiloxanen aus Hydrolysaten spielen. Diese Stoffe entstehen als Cohydrolysate bei der Hydrolyse von technischem Dimethyldichlorsilan aus Methyltrichlorsilan, das als Nebenprodukt darin enthalten ist. Die Monomethylsiloxygruppen reagieren mit Kaliumhydroxid unter Bildung eines sogenannten "Kalium-T-Salzes" (Kaliummethylsiliconat), das ein weniger wirksamer Equilibrierungskatalysator als Kaliumhydroxid ist. Bei der kontinuierlichen Durchführung des Verfahrens zur Gewinnung cyclischer Polydimethylsiloxane muß daher, entsprechend dem Gehalt des Hydrolysats an Monomethylsiloxygruppen (und somit des technischen Dimethyldichlorsilans an Methyltrichlorsilan), ständig Kaliumhydroxid zugeführt werden. Über ähnliche Reaktionen verbrauchen andere Verunreinigungen weiteres KOH. Entsprechend reichert sich das Reaktionsgemisch nach und nach mit Kalium-T-Salz an. Nach der Offenlegungsschrift verhindert der Zusatz eines hochsiedenden Alkohols, wie Stearylalkohol, die sonst stattfindende Gelierung des an Kalium-T-Salz angereicherten Reaktionsgemisches und soll sogar das Gleichgewicht zwischen offenkettigen und cyclischen Polydimethylsiloxanen zugunsten der letzteren verschieben. Durch den Zusatz wird jedoch nicht die Entstehung von Kalium-T-Salz verhindert, es wird vielmehr lediglich die Handhabung der Reaktionsgemische nach Unterbrechung des Verfahrens erleichtert. Die Zykluszeiten des kontinuierlichen Verfahrens von Betriebsunterbrechung zu Betriebsunterbrechung bleiben unverändert und werden im wesentlichen durch den Methyltrichlorsilan-Gehalt des zur Herstellung des Hydrolysats eingesetzten technischen Dimethyldichlorsilans bestimmt, ebenso wie die Menge des unerwünschten Kalium-T-Salzes und damit des Rückstandes, der bei Betriebsunterbrechung mit erheblichen Kosten entsorgt werden muß. Bei der Entsorgung gehen neben bzw. mit dem Kalium-T-Salz das eingesetzte Kaliumhydroxid und Anteile des verwendeten Lösungsmittels sowie des Edukts und des Produkts verloren.

Zwar ist es möglich, die erwähnten trifunktionellen Einheiten im Hydrolysat zu vermeiden, indem man bei der Destillation des Dimethyldichlorsilans das Methyltrichlorsilan abtrennt. Dies ist jedoch mit hohem apparativen Aufwand sowie zusätzlichen Energiekosten verbunden und deshalb sehr teuer.

### Aufgabe der Erfindung

Es ist daher eine Aufgabe der Erfindung, ein kontinuierlich arbeitendes Verfahren bereitzustellen, nach dem cyclische Polydimethylsiloxane und insbesondere Octamethylcyclotetrasiloxan in hohen Ausbeuten und in hoher, den gestiegenen Anforderungen entsprechender Reinheit aus Hydrolysaten von technischem Dimethyldichlorsilan hergestellt werden, wobei der Katalysatorverbrauch unabhängig von dem Gehalt des genannten Ausgangsmaterials an Monomethylsiloxygruppen enthaltenden Cohydrolysaten und geringer ist als bei bekannten Verfahren, die Zykluszeiten zwischen Betriebsunterbrechungen entsprechend länger sind und, bezogen auf den Durchsatz, bei Betriebsunterbrechungen geringere Mengen an Rückständen entsorgt werden müssen.

### Kurzbeschreibung der Erfindung

Erfindungsgemäß wird diese Aufgabe gelöst durch ein Verfahren zur kontinuierlichen Herstellung von cyclischen Polydimethylsiloxanen der Formel [(CH₃)₂SiO]ₙ (I), in der n eine ganze Zahl von 3 bis 10 bedeutet, aus dem Hydrolysat von technischem, u. a. Methyltrichlorsilan und andere Verunreinigungen enthaltenden Dimethyldichlorsilan, bei dem das Hydrolysat und ein alkalischer Katalysator kontinuierlich einer Reaktionszone zugeführt werden, in der das Gemisch cyclischer und kettenförmiger Polydimethylsiloxane ins Gleichgewicht gesetzt und aus der kontinuierlich cyclische Polydimethylsiloxane abdestilliert werden, worauf aus den cyclischen Polydimethylsiloxanen die erwünschten Homologen abgetrennt und gegebenenfalls unerwünschte Homologe I in die Reaktionszone zurückgeführt werden.

Das Verfahren kann auch so gestaltet sein, daß das Hydrolysat in cyclische und kettenförmige Verbindungen aufgetrennt, die Fraktion der kettenförmigen Verbindungen in die Reaktionszone und die cyclischen Verbindungen einschließlich Monomethylsiloxygruppen enthaltende Anteile in die Destillationsvorrichtung geführt werden.

Das Verfahren ist dadurch gekennzeichnet, daß man nach Abtrennung der erwünschten Homologen mindestens eine Fraktion, die Verbindungen mit Monomethylsiloxygruppen enthält, abtrennt und nicht in die Reaktionzone zurückführt, also aus dem Verfahren ausschleust.

Monomethylsiloxygruppen haben die Struktur CH₃ SiO_{3/2} und können auch als Monomethylorthosilikatgruppen bezeichnet werden. Typische Verbindungen mit Monomethylsiloxygruppen (auch "T-Gruppen" genannt), die erfindungsgemäß nicht in die Reaktionszone zurückgeführt werden, sind z. B. Si₄ (CH₃)₇ O₄ OH ("D₃ TOH"; Siedepunkt: ca. 198° C, Abschätzung aus dem Gaschromatogramm), Si₄ (CH₃)₆ O₅ ("D₂T₂"; Siedepunkt: ca. 171° C, Abschätzung aus dem Gaschromatogramm), Si₅ (CH₃)₈ O₆("D₃T₂"; Siedepunkt 203° C) und Si₆ (CH₃)₁₀ O₇ ("D₄T₂"; Siedepunkt 232° C). Sie können im Gemisch mit Hexamethylcyclotrisiloxan (D3) (Siedepunkt: 134° C), Octamethylcyclotetrasiloxan (D4; Siedepunkt: 175° C), Dekamethylcyclopentasiloxan (D5; Siedepunkt: 210° C) und/oder Dodekamethylcyclohexasiloxan (D6) vom Siedepunkt 245° C ausgeschleust werden. Es ist aber auch möglich, T-Gruppen-haltige Verbindungen zusammen mit höheren Homologen der cyclischen Polydimethylsiloxane I auszuschleusen. Die Entnahme kann mit Sumpf-, Seiten- oder Kopfströmen der Kolonnen erfolgen.

Das Verfahren der Erfindung dient bevorzugt zur Herstellung von Octamethylcyclotetrasiloxan.

### Vorteile der Erfindung:

Erfindungsgemäß werden die Monomethylsiloxygruppen enthaltenden Verbindungen nicht quantitativ als Kalium-T-Salze in der Reaktionszone zurückgehalten, sondern fallen teilweise im Destillat an. Entsprechend geringer ist der Katalysatorverbrauch, entsprechend länger sind die Zykluszeiten zwischen Betriebsunterbrechungen und entsprechend geringer ist die Menge an Rückstand, bezogen auf den Durchsatz, und der Aufwand für dessen Entsorgung. Durch Variation des Verhältnisses von Katalysatormenge zu T-Gruppen kann man das Verhältnis von destillierten und von als Kalium-T-Salz zurückgehaltenen Monomethylsiloxygruppen enthaltenden Verbindungen verändern, z.B. nach Maßgabe des Bedarfs an cyclischen Polydimethylsiloxanen mit einem Gehalt an diesen Verbindungen. Weiterhin kann man technisches Dimethyldichlorsilan mit höheren Gehalten an Methyltrichlorsilan hydrolysieren, wodurch der Destillationsaufwand zur Reinigung des Dimethyldichlorsilans vermindert wird, ohne daß man bei der erfindungsgemäßen Herstellung von cyclischen Polydimethylsiloxanen aus dem Hydrolysat einen unerwünscht hohen Anfall von entsorgungsbedürftigem Rückstand und häufige Betriebsunterbrechungen in Kauf nehmen muß.
Überraschenderweise genügt selbst ein deutlicher molarer Unterschluß an alkalischem Katalysator, bezogen auf Mole Monomethylsiloxygruppen im Hydrolysat, um die katalytische Equilibrierung des Ausgangshydrolysats zu bewirken. Offenbar läuft die Equilibrierung bevorzugt ab gegenüber der Bildung des T-Salzes unter Verbrauch von Equilibrierungskatalysator.

### Beschreibung der Erfindung

Ausgangsmaterial für das Verfahren nach der Erfindung ist das Hydrolysat von technischem Dimethyldichlorsilan. Je nach den Bedingungen bei dessen Synthese und dem destillativen Aufwand bei dessen Reinigung liegt der (gaschromatographisch bestimmte) Gehalt an Methyltrichlorsilan zwischen 10 ppm und einigen 1.000 ppm.

Die Hydrolysereaktion ist dem Fachmann gut bekannt. Sie kann z.B. durchgeführt werden, indem man technisches Dimethyldichlorsilan in 25-30 Gew.-%-ige wässrige Salzsäure von etwa 50°C einträgt und gleichzeitig unter Aufrechterhaltung der Temperatur durch Kühlen Wasser in dem Maße zuführt, daß die Chlorwasserstoffkonzentration erhalten bleibt. Das Hydrolysat wird durch Auswaschen mit Wasser von Chlorwasserstoff befreit, das Wasser abgetrennt, z.B. durch Zentrifugieren, und dann das Hydrolysat neutralisiert, z.B. mit Sodalösung.

Das so oder auf andere Weise erhaltene Hydrolysat, das je nach dem Gehalt des technischen Dimethyldichlorsilans an Methyltrichlorsilan einen bestimmten Gehalt an Monomethylsiloxygruppen aufweist, kann ohne weitere Reinigung für das erfindungsgemäße Verfahren eingesetzt werden. Es wird dazu kontinuierlich einer Reaktionszone zugeführt, in der es unter dem Einfluß eines gleichzeitig zugeführten alkalischen Katalysators equilibriert (oder ins Gleichgewicht gesetzt) wird. Als Katalysatoren eignen sich insbesondere Alkalimetallhydroxide, -oxide, -alkoholate und - siloxanolate wie z.B. Kaliumhydroxid. Man wendet sie zweckmäßig in Mengen von 0,2 bis 0,8 mol je mol Monomethylsiloxygruppen im Hydrolysat an. Da auch andere Verunreinigungen im Hydrolysat, wie z. B. Säurereste , Chlorkohlenwasserstoffe, Si-Hhaltige Verbindungen u.ä., alkalischen Katalysator verbrauchen, läßt sich die erforderliche Katalysatormenge nicht allein aus dem T-Gruppengehalt des Hydrolysats errechnen. Die optimale Katalysatormenge kann durch orientierende Versuche unschwer ermittelt werden.

Ein dritter Bestandteil des Gemisches in der Reaktionszone ist ein organisches Lösungsmittel . Als solches eignen sich die bereits im Stand der Technik empfohlenen Stoffe, wie höher als die cyclischen Polydimethylsiloxane I siedende Kohlenwasserstoffe, Polyether , wie Diarylether, sowie hochsiedende Alkohole, insbesondere Alkanole, mit 16 bis 40, insbesondere mit 20 bis 30 Kohlenwasserstoffatomen. Das organische Lösungsmittel muß nicht ständig der Reaktionszone zugeführt werden. Man legt es vielmehr zweckmäßig zu Beginn der Reaktion vor und wendet es vorteilhaft in einer solchen Menge an, daß seine Konzentration in der Reaktionszone 15 bis 25 Gew.-% beträgt.

Das Gleichgewicht stellt sich bei Temperaturen von 140 bis 200°C schnell ein. Man arbeitet vorteilhaft im Temperaturbereich von 150 bis 180°C. Im Gleichgewichtszustand liegen cyclische Polydimethylsiloxane und offenkettige Polydimethylsiloxane mit endständigen Hydroxylgruppen nebeneinander vor. Die Lage des Gleichgewichts hängt u.a. von der Temperatur und dem Wassergehalt des Gleichgewichtsgemisches ab. Die cyclischen Polydimethylsiloxane haben einen niedrigeren Siedepunkt als die offenkettigen Polydimethylsiloxanole. Man stellt daher den Druck so ein, daß die cyclischen Dimethylsiloxane bei der jeweiligen Temperatur des Equilibrierungsgemisches abdestillieren, die offenkettigen Polydimethylsiloxanole jedoch in der Reaktionszone verbleiben. Dieser Druck beträgt im allgemeinen 60 bis 150 mbar, insbesondere 80 bis 100 mbar. Durch intramolekulare Kondensation von offenkettigen Polydimethylsiloxanolen entstehen erneut cyclische Polydimethylsiloxane, die wiederum abdestillieren, so daß schließlich praktisch das gesamte Hydrolysat in cycliscbe Polydimethylsiloxane umgewandelt wird.

Das Abdestillieren der cyclischen Polydimethylsiloxane kann so erfolgen, daß die cyclischen Polydimethylsiloxane ohne Rektifikation, also ohne eine Kolonne zu durchströmen, kondensiert werden, so daß keine wesentlichen Anteile an cyclischen Polydimethylsilpxanen der Formel I in der Reaktionszone zurückgehalten werden. Man arbeitet z. B. bei 180° C und 90 mbar und unter solchen apparativen Bedingungen, daß auch die hochsiedenden Polydimethylsiloxane mit 6 bis 8 Dimethylsiloxygruppen abdestillieren, flüssige Anteile in Form von Tröpfchen oder Nebeln, die Katalysator, Kalium-T-Salz und Lösungsmittel enthalten, jedoch zurückgehalten werden. Dafür genügt z. B. ein Kolonnenaufsatz auf dem Reaktor.

Aus den cyclischen Polydimethylsiloxanen der Formel I, die noch Monomethylsiloxygruppen enthaltende Verbindungen aufweisen, werden die erwünschten Homologen abgetrennt, zweckmäßig durch Rektifikation, gegebenenfalls nach vorheriger Kondensation des den Reaktor verlassenden Dampfgemisches und Zwischenlagerung des Kondensats. Wenn reines D₄ das gewünschte Produkt ist, kann man mit zwei Kolonnen arbeiten, wobei man der ersten Kolonne Hexamethylcyclotrisiloxan (D3) als Kopfprodukt abtrennt und das Sumpfprodukt in eine zweite Kolonne überführt, in der als Kopfprodukt reines D4 gewonnen wird. Das Kopfprodukt D3 der ersten Kolonne wird in die Reaktionszone zurückgeführt und somit letztlich ebenfalls als D4 gewonnen. Das Sumpfprodukt der zweiten Kolonne besteht überwiegend aus D5 sowie höheren Homologen und enthält Verbindungen mit Monomethylsiloxygruppen, wie D₄ T₂, D₃ T₂, D₃TOH u. a. Es wird nicht in die Reaktionszone zurückgeführt und kann nach Bestimmung des T-Gehaltes durch Gaschromatographie bei der Herstellung von Siliconen mit gewünschtem, definierten Verzweigungsgrad durch T-Einheiten oder als Komponente in Zubereitungen verwendet oder mitverwendet werden.

Sofern auch D₃ ein erwünschtes Homolog ist, wird es nicht in die Reaktionszone zurückgeführt, sondern als Produkt abgezogen. In diesem Fall gelangt also keine Destillatfraktion zurück in die Reaktionszone.

Alternativ kann die Auftrennung der cyclischen Polydimethylsiloxane auch in nur einer Kolonne erfolgen, in der man D₃ als Kopfprodukt, D₄ im Seitenstrom und D₅ mit höheren Homologen und Monomethylsiloxygruppen enthaltenden Verbindungen als Sumpfprodukt abzieht.

Bei einer anderen Ausführungsform des erfindungsgemäßen Verfahrens werden aus dem Sumpfprodukt der zweiten Kolonne in einer dritten Kolonne D₅ und die Monomethylsiloxygruppen enthaltenden Verbindungen D₃ T₂ und D₄ T₂ als Kopfprodukt ausgeschleust. Dieses Kopfprodukt eignet sich in besonderem Maße für die Herstellung von Siloxanen mit definiertem Verzweigungsgrad durch T-Gruppen oder als Komponente in Zubereitungen. Die höheren Homologen des D₅ bleiben als Sumpfprodukt zurück und werden zur Verbesserung der Gesamtausbeute an erwünschten Stoffen in die Reaktionszone zurückgeführt.

Bei einer weiteren Variante des erfindungsgemäßen Verfahrens nutzt man die Differenz der Siedepunkte von D₅ und D₄ T₂ aus, indem man am Kopf der dritten Kolonne nur eine begrenzte, dafür aber an D₄ T₂ und D₃ T₂ arme Menge D₅ abzieht und wahlweise die Reaktionszone zurückführt oder ausschleust. Das Sumpfprodukt wird in eine vierte Kolonne überführt, in der man als Kopfprodukt eine Fraktion abzieht, die im wesentlichen aus D₅ und D₆ besteht und eine relativ hohe Konzentration an Monomethylsiloxygruppen enthaltende Verbindungen (im wesentlichen D₄ T₂) aufweist. Diese Fraktion wird nicht in die Reaktionszone zurückgeführt, wohl aber das Sumpfprodukt, so daß das darin noch enthaltende D₆ sowie dessen höhere Homologe in erwünschte Produkte umgewandelt werden. Je nach Anordnung der Kolonnen ist auch die Abtrennung nur von D₆ zusammen mit T-gruppenhaltigen Verbindungen möglich.

Die folgenden Beispiele sollen die Erfindung weiter erläutern, nicht aber ihren Umfang beschränken, wie er sich aus den Patentansprüchen ergibt. Alle genannten Teile sind Gewichtsteile.

### Beispiel 1 (Vergleichsbeispiel)

Die Equilibrierungsreaktion mit Destillation der cyclischen Polydimethylsiloxane wird in einem Rührkesselreaktor durchgeführt, der mit einem Heizmantel, innenliegenden Wärmetauschern und einer Spritzschutzeinrichtung in einem Gasrohr versehen ist, das den Reaktor mit einem Kondensator mit Destillatauffangbehälter verbindet. Als anfängliche Reaktorfüllung werden 30 Teile D₅ (Dekamethylcyclopentasiloxan) und 7 Teile des Alkanols C₂₂ H₄₅ OH vorgelegt. Der Druck wird auf 90 mbar eingestellt und die vorgelegte Mischung auf 100°C erhitzt.

Nun beginnt man mit der Zugabe von 0,1 Teilen 45 Gew. %-iger Kalilauge pro Stunde und steigert die Temperatur des Reaktorinhalts innerhalb einer Stunde auf 170° C. Während dieses Aufheizschrittes beginnen die cyclischen Polydimethylsiloxane abzudestillieren. Das Dampfgemisch gelangt über das Gasrohr mit der Spritzschutzeinrichtung in den Kondensator und wird flüssig über die Spritzschutzeinrichtung in den Reaktor zurückgeführt. Nach 0,5 Stunden beginnt man mit der Zugabe von 70 Teilen/h des Hydrolyseproduktes von technischem Dimethyldichlorsilan (enthaltend 100 ppm Methyltrichlorsilan) sowie 10 Teilen/h des Kopfproduktes der D₃-Kolonne (siehe unten) und 20 Teilen/h des Sumpfproduktes der D₄-Kolonne (s. u.). Ab diesem Zeitpunkt wird ein den zugeführten Mengen entsprechender Anteil an destilliertem cyclischen Polydimethylsiloxan abgenommen und in das Vorratsgefäß der Destillationskolonnen überführt.

Die Trennung der cyclischen Polydimethylsiloxane erfolgt unter Vakuum in zwei Füllkörperkolonnen. In der ersten Kolonne (Druck: 350 mbar, Kopftemperatur: 113° C, Sumpftemperatur: 146°C) wird das gesamte D3 an den Kopf destilliert und von dort in den Reaktor zurückgeführt (10 Teile/h). Das D3-freie Sumpfprodukt wird in die zweite Kolonne (Druck: 220 mbar, Kopftemperatur: 124° C, Sumpftemperatur: 137° C) gepumpt, in der 69 Teile/h D4 in reiner Form als Kopfprodukt anfallen. Das Sumpfprodukt (20 Teile/h) dieser Kolonne, das im wesentlichen aus höheren Homologen des D4 besteht und Monomethylsiloxygruppen] enthaltende Verbindungen aufweist, wird in den Reaktor zurückgeführt.

Nach 350 Stunden ununterbrochenem Betrieb wird die Zufuhr von weiterem Hydrolysat und Katalysator eingestellt. Die im Kessel noch vorhandenen cyclischen Polydimethylsiloxane werden weitestgehend abdestilliert (Sumpftemperatur 180° C, 90 mbar), und der verbleibende Rückstand aus Kaliumverbindungen und organischem Lösungsmittel wird heiß abgelassen. Die abgelassene Menge beträgt 45 Teile, die als Reststoff entsorgt werden.

### Beispiel 2 (erfindungsgemäß)

Der Versuch des Beispiels 1 wird in analoger Weise wiederholt mit dem Unterschied, daß die Menge der als Katalysator zugeführten 45 Gew. %-igen Kalilauge statt 0,1 Teile/h nur 0,06 Teile/h beträgt, am Kopf der zweiten Kolonne nur 54 Teile/h D4 abgenommen werden und das Sumpfprodukt der zweiten Kolonne (20 Teile/h) in eine dritte Kolonne (Druck: 52 mbar, Kopftemperatur: 115° C, Sumpftemperatur: 142° C) überfuhrt wird. Hier werden am Kopf 15 Teile/h D5 mit durchschnittlich 200 ppm D₄T₂ und 100 ppm D₃T₂ (gaschromatographisch bestimmt) abgetrennt und ausgeschleust. Der Sumpf (5 Teile/h) dieser dritten Kolonne wird wieder in den Reaktor zurückgeführt.

Nach 350 Stunden ununterbrochenem Betrieb wird die Zufuhr von weiterem Hydrolysat und Katalysator eingestellt. Man verfährt weiter wie in Beispiel 1 und erhält einen Rückstand von 30 Teilen, der als Reststoff entsorgt wird.

### Beispiel 3 (erfindungsgemäß)

Der Versuch des Beispiels 2 wird in analoger Weise wiederholt mit dem Unterschied, daß die Menge der als Katalysator zugeführten 45 Gew. %-igen Kalilauge statt 0,06 Teile/h nur 0,04 Teile/h beträgt, am Kopf der dritten Kolonne nur 13 Teile/h D₅ abgenommen werden und das Sumpfprodukt der dritten Kolonne (7 Teile/h) in eine vierte Kolonne (Druck: 24 mbar, Kopftemperatur: 109° C, Sumpftemperatur: 192° C) überführt wird. Hier werden am Kopf 2 Teile/h eines Gemisches von D₅ und D₆ mit durchschnittlich etwa 5.000 ppm D₄T₂ und etwa 100 ppm D₃T₂ (gaschromatographisch bestimmt) abgetrennt und ausgeschleust. Der Sumpf dieser vierten Kolonne (5 Teile/h) wird wieder in den Reaktor zurückgeführt.

Nach 350 Stunden ununterbrochenem Betrieb wird die Zufuhr von weiterem Hydrolysat und Katalysator eingestellt. Man verfährt weiter wie in Beispiel 1 und erhält einen Rückstand von 20 Teilen, der als Reststoff entsorgt wird.

### Diskussion

Ein Vergleich der Beispiele zeigt, daß bei den erfindungsgemäßen Beispielen 2 und 3 die Rückstände im Reaktor kleiner sind als im Vergleichsbeispiel 1, und zwar um so geringer, je kleiner die zugeführte Menge Katalysator und je größer die Menge an ausgeschleusten Verbindungen mit T-Gruppen ist Dadurch werden entsprechend längere Zykluszeiten zwischen den betriebsbedingten Abstellungen möglich. Man erkennt weiterhin, daß die im Vergleich zum Beispiel 2 kleinere Menge Katalysator des Beispiels 3 bewirkt, daß mehr Monomethylsiloxygruppen enthaltende Verbindungen in das Destillat gehen, statt als Kalium-T-Salz im Reaktor zu verbleiben.

## Patentansprüche

1. Verfahren zur kontinuierlichen Herstellung von cyclischen Dimethylsiloxanen der Formel [(CH₃)₂SiO]ₙ, in der n eine ganze Zahl von 3 bis 10 bedeutet, aus dem Hydrolysat von technischem, u. a. Methyltrichlorsilan und andere Verunreinigungen enthaltenden Dimethyldichlorsilan, bei dem das Hydrolysat, cyclische und/oder kettenförmige Dimethylsiloxane kontinuierlich einer Reaktionszone mit einem alkalischen Katalysator zugeführt werden, in der das Hydrolysat ins Gleichgewicht gesetzt und aus der kontinuierlich cyclische Dimethylsiloxane abdestilliert werden, worauf aus den cyclischen Dimethylsiloxanen die erwünschten Homologen abgetrennt und unerwünschte Homologe in die Reaktionszone zurückgeführt werden, **dadurch gekennzeichnet, daß** man neben Abtrennung der erwünschten Homologen mindestens eine Fraktion, die Verbindungen mit Monomethylsiloxygruppen enthält, abtrennt und nicht in die Reaktionszone zurückführt.

2. Verfahren nach Anspruch 1, **dadurch gekennzeichnet, daß** n = 4 bedeutet und Octamethylcyclotetrasiloxan hergestellt wird.

3. Verfahren nach Anspruch 1 oder 2, **dadurch gekennzeichnet, daß** die Verbindungen mit Monomethylsiloxygruppen Si₄ (CH₃)₇O₄ OH (D₃TOH), Si₄ (CH₃)₆O₅ (D₂T₂), Si₅ (CH₃)₈ O₆(D₃T₂) und /oder Si₆ (CH₃)₁₀O₇ (D₄T₂) sind.

4. Verfahren nach einem der Ansprüche 1 bis 3, **dadurch gekennzeichnet, daß** man D₂T₂, D₃T_{2,} D₄ T₂ und/oder D₃TOH im Gemisch mit Hexamethylcyclotrisiloxan (D₃), Octamethylcyclotetrasiloxan (D₄), Dekamethylcyclopentasiloxan (D₅) und/oder Dodekamethylcyclohexasiloxan (D₆) ausschleust.

5. Verfahren nach einem der Ansprüche 1 bis 4, **dadurch gekennzeichnet, daß** man die cyclischen Dimethylsiloxane ohne Rektifikation kondensiert, so daß keine wesentlichen Teile an cyclischen Dimethylsiloxanen in der Reaktionszone zurückgehalten werden.

6. Verfahren nach einem der Ansprüche 1 bis 5, **dadurch gekennzeichnet, daß** man als organische Lösungsmittel einen Kohlenwasserstoff, einen Polyether oder ein Alkanol mit 16 bis ca. 40 Kohlenstoffatomen verwendet.

7. Verfahren nach einem der Ansprüche 1 bis 6, **dadurch gekennzeichnet, daß** man als alkalischen Katalysator ein Alkalimetallhydroxid, -oxid, -alkoholat oder -siloxanolat verwendet.

8. Verfahren nach Anspruch 7, **dadurch gekennzeichnet, daß** der alkalische Katalysator Kaliumhydroxid ist.

9. Verfahren nach einem der Ansprüche 1 bis 8, **dadurch gekennzeichnet, daß** der alkalische Katalysator in einer Menge von 0,2 bis 0,8 mol je mol Monomethylsiloxygruppe im Hydrolysat eingesetzt wird.

## Claims

1. Process for the continuous preparation of cyclic dimethylsiloxanes of the formula [(CH₃)₂SiO]ₙ, where n is an integer from 3 to 10, from the hydrolysate of industrial dimethyldichlorosilane containing, inter alia, methyltrichlorosilane and other impurities, in which the hydrolysate, cyclic and/or open-chain dimethylsiloxanes are fed continuously together with an alkaline catalyst into a reaction zone in which the hydrolysate is brought to equilibrium and from which the cyclic dimethylsiloxanes are distilled off continuously, after which the desired homologues are separated off from the cyclic dimethylsiloxanes and undesired homologues are returned to the reaction zone, **characterized in that**, in addition to the desired homologues being separated off, at least one fraction comprising compounds containing monomethylsiloxy groups is separated off and not returned to the reaction zone.

2. Process according to Claim 1, **characterized in that** n = 4 and octamethylcyclotetrasiloxane is prepared.

3. Process according to Claim 1 or 2, **characterized in that** the compounds containing monomethylsiloxy groups are Si₄(CH₃)₇O₄OH (D₃TOH), Si₄(CH₃)₆O₅ (D₂T₂), Si₅(CH₃)₈O₆ (D₃T₂) and/or Si₆(CH₃)₁₀O₇ (D₄T₂).

4. Process according to any of Claims 1 to 3, **characterized in that** D₂T₂, D₃T₂, D₄T₂ and/or D₃TOH are/is discharged in admixture with hexamethylcyclotrisiloxane (D₃), octamethylcyclotetrasiloxane (D₄), decamethylcyclopentasiloxane (D₅) and/or dodecamethylcyclohexasiloxane (D₆).

5. Process according to any of Claims 1 to 4, **characterized in that** the cyclic dimethylsiloxanes are condensed without rectification, so that no significant amount of cyclic dimethylsiloxanes are retained in the reaction zone.

6. Process according to any of Claims 1 to 5, **characterized in that** a hydrocarbon, a polyether or an alkanol having from 16 to about 40 carbon atoms is used as organic solvent.

7. Process according to any of Claims 1 to 6, **characterized in that** an alkali metal hydroxide, oxide, alkoxide or siloxanolate is used as alkaline catalyst.

8. Process according to Claim 7, **characterized in that** the alkaline catalyst is potassium hydroxide.

9. Process according to any of Claims 1 to 8, **characterized in that** the alkaline catalyst is used in an amount of from 0.2 to 0.8 mol per mol of monomethylsiloxy groups in the hydrolysate.

## Revendications

1. Procédé de production continue de diméthylsiloxanes cycliques de formule [(CH₃)₂SiO]ₙ, où n représente un nombre entier de 3 à 10, à partir de l'hydrolysat de diméthyldichlorosilane technique contenant entre autres du méthyltrichlorosilane et d'autres impuretés, où l'hydrolysat, les diméthylsiloxanes cycliques et/ou linéaires sont envoyés en continu dans une zone de réaction avec un catalyseur alcalin où l'hydrolysat est mis en équilibre et d'où les diméthylsiloxanes cycliques sont retirés en continu par distillation, après quoi les homologues souhaités sont séparés des diméthylsiloxanes cycliques et les homologues indésirables sont renvoyés dans la zone de réaction, **caractérisé en ce que** non seulement on sépare les homologues souhaités, mais encore on sépare au moins une fraction qui contient des composés à groupes monométhylsiloxy et que l'on ne renvoie pas dans la zone de réaction.

2. Procédé selon la revendication 1, **caractérisé en ce que** n = 4 et l'octaméthylcyclotétrasiloxane est produit.

3. Procédé selon la revendication 1 ou 2, **caractérisé en ce que** les composés à groupes monométhylsiloxy sont
Si₄(CH₃)₇O₄OH (D₃TOH),Si₄(CH₃)₆O₅ (D₂T₂),Si₅(CH₃)₈O₆ (D₃T₂) et/ou Si₆(CH₃)₁₀O₇(D₄T₂).

4. Procédé selon l'une des revendications 1 à 3, **caractérisé en ce que** l'on extrait D₂T₂, D₃T₂, D₄T₂ et/ou D₃TOH en mélange avec l'hexaméthylcyclotrisiloxane (D₃), l'octaméthylcyclotétrasiloxane (D₄), le décaméthylcyclopentasiloxane (D₅) et/ou le dodécaméthylcyclohexasiloxane (D₆).

5. Procédé selon l'une des revendications 1 à 4, **caractérisé en ce que** l'on condense les diméthylsiloxanes cycliques sans rectification, de sorte qu'aucune proportion sensible de diméthylsiloxanes cycliques n'est maintenue dans la zone de réaction.

6. Procédé selon l'une des revendications 1 à 5, **caractérisé en ce que** l'on utilise comme solvant organique un hydrocarbure, un polyéther ou un alcanol ayant 16 à environ 40 atomes de carbone.

7. Procédé selon l'une des revendications 1 à 6, **caractérisé en ce que** l'on utilise comme catalyseur alcalin un hydroxyde, oxyde, alcoolate ou siloxanolate de métal alcalin.

8. Procédé selon la revendication 7, **caractérisé en ce que** le catalyseur alcalin est l'hydroxyde de potassium.

9. Procédé selon l'une des revendications 1 à 8, **caractérisé en ce que** le catalyseur alcalin est utilisé en une quantité de 0,2 à 0,8 mol par mol de groupe monométhylsiloxy dans l'hydrolysat.
